# EUROPÄISCHE PATENTSCHRIFT

(11) **EP 3 831 187 B1**
(45) Veröffentlichungstag und Bekanntmachung des Hinweises auf die Patenterteilung: **03.04.2024**
(21) Anmeldenummer: 20205903.6
(22) Anmeldetag: 05.11.2020
(51) Int. Cl.: A01D 34/86, A01B 63/11

(54) **AUSLEGER-ARBEITSGERÄT, SELBSTFAHRENDE ARBEITSMASCHINE MIT EINEM SOLCHEN AUSLEGER-ARBEITSGERÄT SOWIE EIN VERFAHREN ZUM DETEKTIEREN DER AUF DEN AUSLEGER EINWIRKENDEN BELASTUNGEN**
BOOM WORK DEVICE, SELF-PROPELLED WORK MACHINE WITH SUCH A BOOM WORK DEVICE AND METHOD FOR DETECTING THE LOADS ACTING ON THE BOOM
APPAREIL DE TRAVAIL À BRAS PORTEUR, ENGIN DE TRAVAIL AUTONOME DOTÉ D'UN TEL APPAREIL ET PROCÉDÉ DE DÉTECTION DES CHARGES AGISSANT SUR LE BRAS PORTEUR

(30) Priorität: 04.12.2019 DE 102019133069
(43) Veröffentlichungstag der Anmeldung: 09.06.2021
(73) Patentinhaber: MULAG FAHRZEUGWERK Heinz Wössner GmbH & CO. KG, 77728 Oppenau (DE)
(72) Erfinder: Wössner, Holger, 77704 Oberkirch (DE)
(74) Vertreter: Weickmann & Weickmann PartmbB

(56) Entgegenhaltungen:
- EP-A1- 1 159 866
- EP-A1- 1 776 857
- CN-A- 106 973 617
- DE-U1- 29 907 728
- GB-A- 2 495 497
- US-B1- 6 234 508

## Beschreibung

### I. Anwendungsgebiet

Die Erfindung dreht sich um das Erfassen der Belastungen, die auf den Ausleger eines Ausleger-Arbeitsgerätes einwirken.

### II. Technischer Hintergrund

Bei einem solchen Ausleger-Arbeitsgerät werden im Arbeitseinsatz häufig Belastungen vom Arbeitskopf auf den Ausleger übertragen, nicht nur durch die Gewichtskraft des Arbeitskopfes, gerade im dynamischen Betrieb, sondern häufig deshalb, weil der Arbeitskopf im Arbeitseinsatz mit der Umgebung in Kontakt steht und dadurch beispielsweise Widerstandskräfte von der Umgebung auf den Arbeitskopf und von dort auf den Ausleger übertragen werden.

Ein typisches Beispiel ist ein Ausleger-Mähgerät, mit dem der Bewuchs auf dem Randstreifen neben einer Straße gemäht werden soll. Der Arbeitskopf ist dann ein Mähkopf, und liegt in aller Regel mit einer oder mehreren Tastrollen auf dem Untergrund auf und wird durch die Vorwärtsbewegung des Trägerfahrzeuges vorwärts bewegt.

Abhängig von der Auflagekraft auf dem Untergrund, der Kontur des Untergrundes in Fahrtrichtung, Art und Menge des Bewuchses sowie weiterer Faktoren ergibt dies sehr unterschiedliche Belastungen auf den Auslegerarm.

Durch Kenntnis dieser Belastungen kann nicht nur die Position des Mähkopfes z.B. hinsichtlich der Höhe oder Neigung des Mähkopfes gegenüber dem Untergrund verändert werden, und hierfür können die Stellelemente, die die Relativlage der meist mehreren Armteile des Auslegerarmes zueinander einstellen, verstellt werden, und auch weitere Parameter, wie etwa die Drehzahl der Messerwelle des Mähkopfes.

Ähnliche Aufgabenstellungen ergeben sich auch bei anderen Arbeitsgeräten wie einem Waschkopf mit rotierenden Bürsten als Arbeitskopf zur Reinigung der Flächen von Schallschutzwänden oder Tunneln.

Häufig wird für die unterschiedlichen Aufgaben an dem Ausleger ein jeweils anderer Arbeitskopf befestigt.

Bekannt ist es, Sensoren zur Erfassung der Belastung direkt an dem Arbeitskopf anzuordnen.

Der Nachteil ist, dass eine Sensor-Ausstattung an jedem einzelnen eingesetzten Arbeitskopf erforderlich ist und zusätzlich eine Datenverbindung vom Arbeitskopf zum Ausleger, sofern die Datenverbindung vom Arbeitskopf zur Steuerung des Ausleger-Arbeitsgerätes nicht drahtlos erfolgt, was jedoch in der Praxis häufig Ausfall-belastet ist.

Der Vorteil dieser Methode besteht darin, die Belastungen sehr nah am Ort ihrer Entstehung, nämlich zwischen Untergrund und Arbeitskopf, zu messen.

Die Druckschrift EP 1 159 866 A, welche den nächstliegenden Stand der Technik bildet, offenbart ein Ausleger-Arbeitsgerät, welches die Merkmale des Oberbegriffs des Anspruchs 1 aufweist.

Ferner sei auf die Druckschriften DE 299 07 728 U1, GB 2 495 497 A, EP 1 776 857 A1, CN 106973617 A und US 6 234 508 B1 hingewiesen.

### III. Darstellung der Erfindung

### a) Technische Aufgabe

Es ist daher die Aufgabe gemäß der Erfindung, aus Ausleger-Arbeitsgerät zu schaffen, welches trotz einfachem und nur einmaligem Aufbau der Sensorik zuverlässig die Belastungen zumindest des Auslegerarmes misst sowie ein in diesem Sinn ausgestattetes selbstfahrendes Arbeitsgerät mit einem solchen Ausleger-Arbeitsgerät.

Die Aufgabe besteht ferner darin, ein Verfahren zum Detektieren der auf den Ausleger eines Ausleger-Arbeitsgerätes einwirkenden Belastungen vorzuschlagen.

### b) Lösung der Aufgabe

Diese Aufgabe wird durch die Merkmale der Ansprüche 1, 16 und 17 gelöst. Vorteilhafte Ausführungsformen ergeben sich aus den Unteransprüchen.

Hinsichtlich des Ausleger-Arbeitsgerätes umfasst dieses zunächst einmal den Auslegerarm selbst, der meist aus mehreren gelenkig miteinander verbundenen Armteilen besteht und dessen hinteres Ende zum Befestigen an einem Trägerfahrzeug ausgebildet ist.

Darüber hinaus besitzt der Auslegerarm an seinem vorderen Ende ein Armende, welches gegenüber dem Rest des Auslegerarms mittels eines Z-Gelenkes um eine als Z-Achse bezeichnete Achse verschwenkt werden kann, und an dem der Arbeitskopf mittels seines dem Auslegerarm zugewandten Kopfendes befestigt werden kann, durch Verschraubung oder Verrastung.

Zusätzlich kann im vorderen Endbereich des Auslegerarmes ein X-Gelenk vorhanden sein, mittels dessen zwei Armteile relativ zueinander um eine quer, insbesondere lotrecht, zu Z-Achse verlaufende X-Achse verschwenkbar sind. Das X-Gelenk kann vor oder hinter - in Verlaufsrichtung des Auslegerarmes - des Z-Gelenkes angeordnet sein.

Bei einem solchen Ausleger-Arbeitsgerät ist eine, insbesondere nur eine, Last-Messeinheit mit mindestens einem Belastungs-Sensor zum Detektieren der auf den Ausleger einwirkenden Belastungen vorhanden.

Erfindungsgemäß ist diese Last-Messeinheit am oder im Auslegerarm (3, 4), ins besondere ortsfest, angeordnet.

Dies hat den Vorteil, dass die benötigte Sensor-Ausstattung nur einmalig am Ausleger-Arbeitsgerät vorhanden sein muss, insbesondere am Auslegerarm, und dadurch abseits des beschädigungsintensiven Arbeitskopfes.

Zwar kann man damit nur die Belastungen messen, die auf den Ausleger einwirken, jedoch können daraus aussagefähige Rückschlüsse gezogen werden, wie hoch die Belastungen sind, die von der Umgebung auf den Arbeitskopf einwirken.

Da die Belastung nicht nur in einer sondern mehr in unterschiedlichen Richtungen gemessen werden soll, sind in der Last-Messeinheit entweder mehrere Sensoren vorhanden, die jeweils die Belastung in nur einer Richtung messen oder mindestens ein Belastungs-Sensor, der die Belastung in mehreren Richtungen, beispielsweise der lotrecht zur Z-Richtung stehenden X- und Y-Richtung, messen kann.

Vorzugsweise will man alle auf den Auslegerarm an seinem vorderen Ende einwirkenden Belastungen kennen, und deshalb soll die Last-Messeinheit , insbesondere der eine oder die mehreren Belastungs-Sensoren, sowohl die Kräfte in X-, Y- und Z-Richtung messen als auch die Torsionsbelastung, also Momente, um diese drei Raumrichtungen messen.

Wenn das dem Auslegerarm zugewandte Kopfende des Arbeitskopfes - wie es meist der Fall ist - drehfest am Armende des Auslegers befestigt ist, bleiben die Messrichtungen des einen oder der mehreren Belastungs-Sensoren in ihrer Ausrichtung zu dem Arbeitskopf immer gleich, sodass hieraus auch Rückschlüsse auf die Art und die Richtung der auf den Arbeitskopf einwirkenden Kräfte und Belastungen gezogen werden können.

Da am Ausleger unterschiedliche Arbeitsköpfe befestigt werden können, die sich hinsichtlich der Belastungen ganz unterschiedlich verhalten, ist es wichtig, dass die das Ausleger-Arbeitsgerät steuernde Steuerung auch die hierfür relevanten Parameter des Arbeitskopfes kennt, also zumindest weiß, um welche Bauart von Arbeitskopf es sich handelt, der momentan am Ausleger angebaut ist, insbesondere auch um welchen konkreten Arbeitskopf es sich handelt.

Denn auch zwei von der Bauart gleiche Mähköpfe können aufgrund unterschiedlicher Herstelltoleranzen oder unterschiedlichen Verschleißzustandes beim Mähen desselben Bewuchses unterschiedliche Belastungen in den Ausleger einbringen.

Aus diesem Grund ist wenigstens ein Erkennungs-Sensor zum Detektieren des am Auslegerarm befestigten Arbeitskopfes vorhanden, und zwar wiederum
- entweder am oder im Auslegerarm, insbesondere ortsfest,
- oder zwischen Kopfende und Armende.

Vorzugsweise ist dann im Wirkbereich dieses Erkennungs-Sensors am Arbeitskopf, insbesondere an oder in dessen Kopfende, ein Erkennungs-Geber vorhanden, den der Erkennungs-Sensor analysieren kann und der die gewünschten Informationen hinsichtlich des angebauten Arbeitskopfes enthält.

Dann muss beim Anbauen eines Arbeitskopfes keine manuelle Eingabe solcher Arbeitskopf-abhängiger Parameter in die Steuerung mehr erfolgen, was die Arbeit beschleunigt, und Eingabefehler vermeidet.

Bevorzugt ist einer der Belastungs-Sensoren mit einem solchen Erkennungs-Sensor funktionsvereinigt, wodurch die Anzahl der notwendigen Sensoren reduziert wird und damit auch die Beschädigungsgefahr.

Erfindungsgemäß ist die Last-Messeinheit am oder im Auslegerarm angeordnet, wobei sie am bzw. im Rest des Auslegerarmes, also auf der vom Arbeitskopf abgewandten Seite des Z-Gelenkes, also hinter dem Z-Gelenk angeordnet

Die genannte Möglichkeit, also hinter dem Z-Gelenk, umfasst mehrere Möglichkeiten, falls zusätzlich ein X-Gelenk vorhenden ist:
- entweder zwischen X-Gelenk und Z-Gelenk
- oder hinter beiden Gelenken, egal in welcher Reihenfolge diese entlang des Auslegerarmes vorhanden sind,
- oder im X-Gelenk, z.B. an dessen oder als dessen Gelenk-Achse.

Alternativ, und nicht erfindungsgemäß, ist die Last-Messeinheit im oder am, vorzugsweise um das Z-Gelenk schwenkbaren, Armende des Auslegerarmes angeordnet.

Diese Möglichkeit hat den Vorteil, dass die Ausrichtung der Last-Messeinheit relativ zum Arbeitskopf Immer die gleiche bleibt, unabhängig von der Schwenklage des Z-Gelenkes und damit des vorderen Armendes, was die Auswertung und Analyse der gemessenen Belastungen bezüglich ihrer Einwirkrichtung auf den Arbeitskopf sehr erleichtert.

Einzelne Belastungssensoren oder auch ganze Last-Messeinheiten können auch an verschiedenen Stellen, insbesondere beabstandet entlang des Auslegerarmes, vorhanden sein, die dann vorzugsweise Kräfte oder Momente in unterschiedlichen Raumrichtungen messen.

Die Last-Messeinheit kann nach einer nicht erfindungsgemäßen Ausführung auch zwischen Auslegerarm und Arbeitskopf angeordnet sein.

Dies kann dann sinnvoll sein, wenn der Arbeitskopf an dem Auslegerarm mittels eines entfernbaren Verbindungs-Elementes, beispielsweise eines einschiebbaren Verbindungs-Bolzens, formschlüssig befestigt wird, denn dann kann dieses entfernt Verbindung-Element die Last-Messeinheit tragen oder selbst Last-Messeinheit sein.

Der wenigstens eine Belastungs-Sensor der Last-Messeinheit kann ein Dehnmessstreifen sein oder ein anderer elektrischer Sensoren, die bei Belastung ihre Spannung oder ihren elektrischen Widerstand ändern.

Um solche Dehnmessstreifen vor Beschädigung gut zu sichern, können diese in Vertiefungen, insbesondere in der dem Arbeitskopf zugewandten Frontseite des Armendes oder der davon abgewandten Rückseite, angeordnet sein und insbesondere darin auch vergossen sein.

Die mit unterschiedlicher Ausrichtung vorhandenen Dehnmessstreifen können über eine elektrische Brückenschaltung miteinander verbunden sein, wodurch bei entsprechender Anordnung nicht nur die Belastungen linear in den einzelnen Raumrichtungen ermittelt werden können, sondern auch Torsionsbelastungen, also Drehmomente, um diese drei Raumrichtungen bestimmt werden.

Da sowohl Dehnmessstreifen als auch diesbezügliche auswärtige Schaltungen, insbesondere Brückenschaltungen, bekannt sind und kostengünstig zugekauft werden können, ergibt dies eine kostengünstige Last-Messeinheit.

Statt einzelne Dehnmessstreifen zu verbauen, können für die Last-Messeinheit auch Lastmess-Bolzen verwendet werden, die ebenfalls am Markt zugekauft werden können und die am Lastmess-Bolzen anliegende Kraft vorzugsweise in wenigstens einer der Querrichtungen zur Haupt-Erstreckungsrichtung des Lastmess-Bolzens messen und insbesondere auch an die Steuerung ausgeben. An oder in einem solchen Lastmess-Bolzen können wiederum einzelne Dehnmessstreifen als Belastung-Sensoren verbaut sein oder auch andere Bauformen von Belastungs-Sensoren

Bereits ein einziger Lastmess-Bolzen kann eine solche Last-Messeinheit bilden.

Dadurch wird der Aufbau der Last-Messeinheit und natürlich auch deren Wechsel einfacher und schneller.

Häufig wird zur Verbindung von Arbeitskopf und Auslegerarm ein an einem der beiden Teile, meist im Auslegerarm, fest vorhandener, also fix montierter, Arretier-Bolzen verwendet, der zum Kuppeln der beiden Teile in eine entsprechende Ausnehmung des anderen Teiles eingeführt und in dieser Stellung die beiden Teile gegeneinander arretiert werden, beispielsweise mittels eines beweglichen Arretier-Elementes wie etwa eines Schwenkhebels, welches vorzugsweise vom Auslegerarm aus betätigt werden kann.

Dann kann dieser Arretier-Bolzen direkt als Lastmess-Bolzen ausgebildet sein, indem beispielsweise ein zugekaufter Lastmess-Bolzen fix an den ihn tragenden Bauteilen montiert wird.

Die Anzahl insgesamt vorhandener Bauteile des Ausleger-Arbeitsgerätes wird bei dieser Lösung durch die Last-Messeeinheit nicht erhöht, und die Auslegerarm-seitige Verbindung von dem Lastmess-Bolzen zur Steuerung muss beim Wechsel des Arbeitskopfes nicht umgebaut werden.

Gelegentlich wird zur Verwendung von Arbeitskopf und Auslegerarm auch ein die beiden Teile formschlüssig verbindendes, entfernbares Verbindungselement wie etwa ein Verbindungs-Bolzen verwendet, der durch zueinander fluchtende Durchgangsöffnungen von Lagerblöcken, die am Arbeitskopf einerseits und Auslegerarm andererseits befestigt sind, eingesteckt wird.

Dann kann wiederum ein Lastmess-Bolzen als ein solcher Verbindungs-Bolzen verwendet werden, ohne die Gesamtanzahl der Bauteile zu erhöhen.

Durch Anordnung vorzugsweise mehrerer Paare von Durchgangsöffnung und hindurch gesteckter Last-Messbolzen kann auf diese Art und Weise der Arbeitskopf drehfest am Armende angeordnet werden, und es kann auf weitere mechanische Befestigungsmittel verzichtet werden.

Da - vor allem die kostengünstigen - Last-Messbolzen nur Belastungen in nur einer Quer-Richtung zu ihrer Längsrichtung, messen, werden mindestens zwei Last-Messbolzen und damit Paare von Durchgangsöffnungen in zwei verschiedenen Querrichtungen der lotrecht zur Z-Richtung stehenden X-Y-Ebene angeordnet werden, vorzugsweise in jeder dieser Querrichtungen sogar zwei Last-Messbolzen redundant.

Je nach Bauform können Lastmess-Bolzen auch die in ihrer Haupt-Erstreckungsrichtung herrschenden Zugkräfte messen, wozu der Lastmess-Bolzen natürlich so verbaut sein muss, dass er an beiden Enden entsprechende Anschläge aufweist, um ihn in Längsrichtung zu belasten, beispielsweise indem der Lastmess-Bolzen als Schraube mit aufzuschraubender Mutter ausgebildet ist.

Eine weitere Möglichkeit besteht darin, zur Kraftmessung und/oder Drehmoment-Messung im Rahmen der Messvorrichtung einen sogenannten Ring-Kraftaufnehmer zu verwenden, die am Markt erhältlich sind.

Dabei handelt es sich um ein - meist zylindrisches - Bauteil, an dessen einander gegenüberliegenden Stirnflächen diejenigen Bauteile befestigt, meist verschraubt, werden können, sodass der Ring-Kraftaufnehmer diejenigen Kräfte - in axialer Richtung und/oder wenigstens einer der Querrichtungen hierzu - misst, die an dieser Verbindungsstelle zwischen den beiden miteinander zu verbinden Bauteilen herrschen.

Die beiden Stirnflächen des Ring-Kraftaufnehmers sind meist als Ringe oder Platten ausgebildet, die durch Stege oder andere Verbindungselemente miteinander verbunden sind, an oder in denen die entsprechenden Kräfte gemessen werden, sodass daraus auch Drehmomente um wenigstens eine der radialen Richtungen des Ring-Kraftaufnehmers, gegebenenfalls stattdessen oder zusätzlich auch um die axiale Richtung des Ring-Kraftaufnehmer ermittelt werden können.

Ein solcher Ring-Kraftaufnehmer wird vorzugsweise mit seiner axialen Richtung fluchtend zur Längsrichtung des Z-Gelenkes zwischen dem Armende des Auslegerarmes und dem Kopfende des Arbeitskopfes verschraubt.

Hinsichtlich einer selbstfahrenden Arbeitsmaschine, die mit einem zuvor beschriebenen Ausleger-Arbeitsgerät ausgestattet ist und wobei die Last-Messeinheit angeordnet und/oder ausgebildet ist wie vorstehend beschrieben,_kann somit die Steuerung auf Basis der Signale der Last-Messeinheit, insbesondere der Belastungs-Sensoren und/oder des wenigstens einen Erkennungs-Sensors, die selbstfahrende Arbeitsmaschine steuern, indem sie
- die Stellelemente zum Verstellen der einzelnen Armteile des Auslegerarmes zueinander als auch zum Trägerfahrzeug steuert,
- insbesondere die Schwenkstellung des Armendes des Auslegerarmes steuert und/oder
- den Arbeitskopf steuert, beispielsweise hinsichtlich der Antriebsdrehzahl der dort vorhandenen angetriebenen Werkzeuge, etwa eine Mäh-Welle,
   und/oder
- die Fahrgeschwindigkeit des Trägerfahrzeuges steuert.

Dadurch wird eine beschädigungs-gefährdete Anordnung von Sensoren am Arbeitskopf selbst vermieden und es muss nicht an jedem Arbeitskopf eine eigene Sensor-Ausstattung vorhanden sein.

Hinsichtlich des Verfahrens zum Detektieren der auf den Auslegerarm eines Ausleger-Arbeitsgerätes einwirkenden Belastungen bei einem erfindungsgemäßen Ausleger-Arbeitsgerät wird die Belastung entweder am oder im Auslegerarm gemessen.

Auch dadurch werden die oben genannten Vorteile erzielt.

### c) Ausführungsbeispiele

Ausführungsformen gemäß der Erfindung sind im Folgenden beispielhaft näher beschrieben. Es zeigen:
- **Figur 1a, b:**: eine bekannte Art der Befestigung eines Arbeitskopfes an dem freien Ende eines Auslegerarmes bei einem Ausleger-Arbeitsgerät in zwei verschiedenen Seitenansichten,
- **Fig. 2a, b:**: ein Trägerfahrzeug mit zwei Ausleger-Mähgeräten in Frontansicht sowie in der Aufsicht von oben,

- **Figur 3:**: den einen der beiden Mähköpfe in vergrößerter Einzeldarstellung in Frontansicht,
- **Figur 4a, b:**: eine nicht erfindungsgemäße 1. Bauform einer Last-Messeinheit am Auslegerarm eines Ausleger-Arbeitsgerätes in zwei verschiedenen Seitenansichten analog zu den Figuren 1a, b,
- **Figur 5:**: weitere Bauformen einer Last-Messeinheit am oder im Auslegerarm eines Ausleger-Arbeitsgerätes in einer Seitenansicht analog zu Figur 1a,
- **Figur 6a, b:**: eine nicht erfindungsgemäße Bauform einer Last-Messeinheit zwischen Auslegerarm und Arbeitskopf bei einem Ausleger-Arbeitsgerät in der Seitenansicht sowie in der Aufsicht auf Figur 6a von oben,
- **Figur 7a, b:**: eine nicht erfindungsgemäße Bauform einer Last-Messeinheit zwischen Auslegerarm und Arbeitskopf bei einem Ausleger-Arbeitsgerät in der Seitenansicht sowie in der Ansicht der Figur 7a von unten.

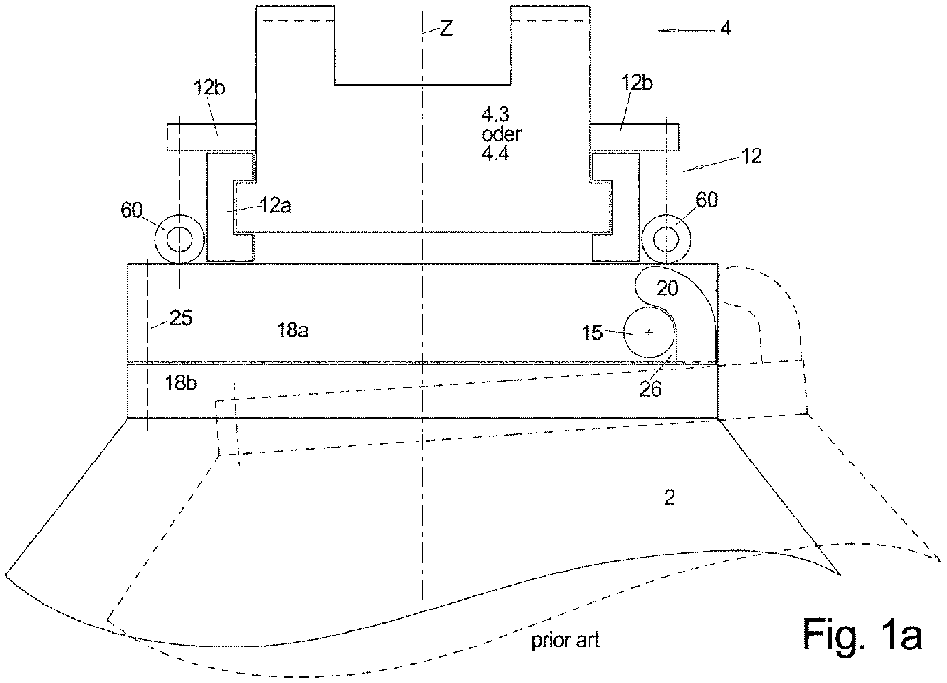

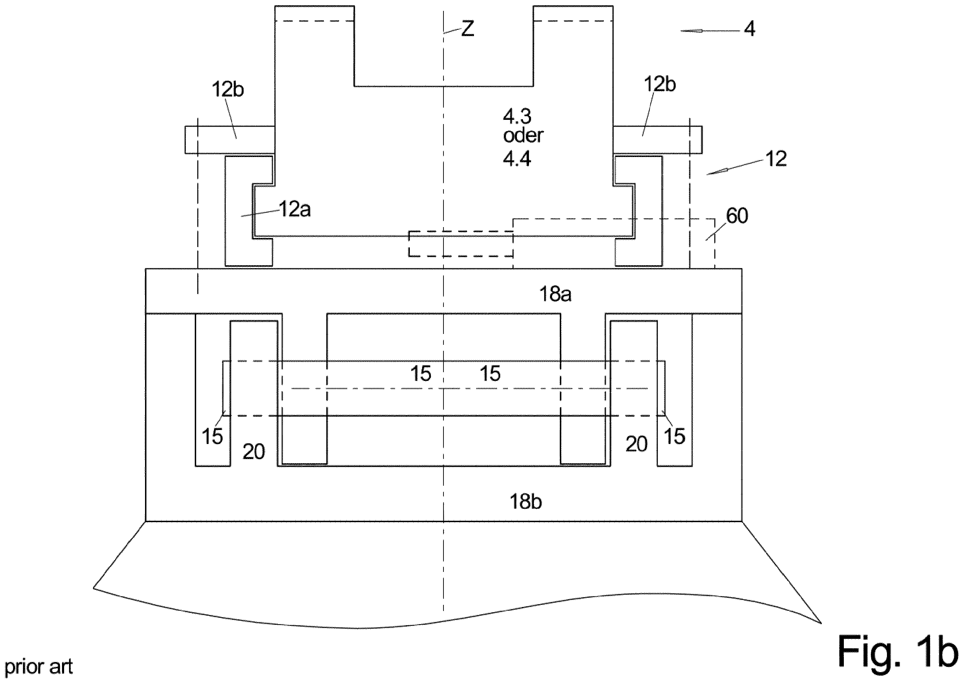

Die **Figur 1a**, b zeigen eine übliche Art der Befestigung eines auswechselbaren Arbeitskopfes 2 am freien Ende eines Auslegerarmes 4 eines Ausleger-Arbeitsgerätes:
Zum Befestigen wird - betrachtet in Blickrichtung der **Figur 1a** - der zu befestigende, gestrichelt dargestellte Arbeitskopf 2 von rechts her so an das Armende 18a herangeschoben, dass die beidseits - siehe **Figur 1b** - von dem Armende 18a in dessen einen Seitenbereich vorstehenden Arretierbolzen 15 in eine alle Arretierausnehmung 26 eintauchen, die durch hakenförmig gekrümmte Arretierelemente 20 gebildet werden, die am dem Armende 18a des Auslegerarmes 4 zugewandten Kopfende 18b des Arbeitskopfes 2 ausgebildet und entsprechend positioniert sind.

Dabei müssen sich Armende 18a und Kopfende 18b noch nicht in der mit ihren gegeneinander gewandten Flächen zueinander fluchtenden Lage zueinander befinden, da der Arbeitskopf 2 in diesem Zustand noch um die Arretierbolzen 15 Schwenkbar ist.

Erst durch die Verschraubung 25 zwischen Armende 18a und Kopfende 18b, vorzugsweise an dem vom Arretierbolzen 15 abgewandten anderen Seitenbereich des Armendes 18a wird der Arbeitskopf 2 formschlüssig und positionsfest zum Auslegerarm 4 positioniert und befestigt.

In den **Figuren 1a**, b ist ferner im Endbereich des Auslegerarmes 4 ein Z-Gelenk 12 dargestellt, mit dem das dem Arbeitskopf 2 zugewandte vorderste Armteil 4.3 des Auslegerarmes 4 als Gelenkteil 12b gegenüber einem an dem Armende 18a drehfest befestigten Gelenkteil 12a gelagert ist um eine Z-Achse, die der Erstreckungsrichtung dieses Armteiles 4.3 entspricht und/oder meist senkrecht zur Trennebene bzw. Kontaktfläche zwischen Armende 18a und Kopfende 18b verläuft.

Das Verschwenken wird dabei durch in diesem Fall zwei an unterschiedlichen Stellen des Umfanges am Armteil 4.3, dem Gelenkteil 12.b, mit Ihrem einem Ende angreifende Stellelemente 60 in Form von Hydraulikzylindern bewirkt, die an dem Armende 18a, also dem anderen Gelenkteil 12a, mit ihrem anderen Ende befestigt sind.

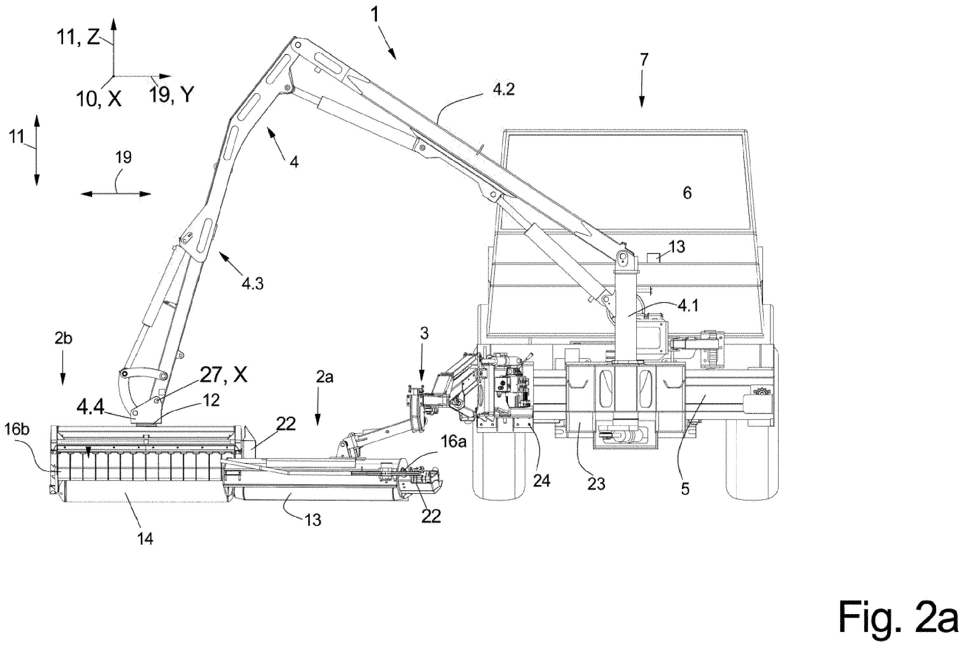

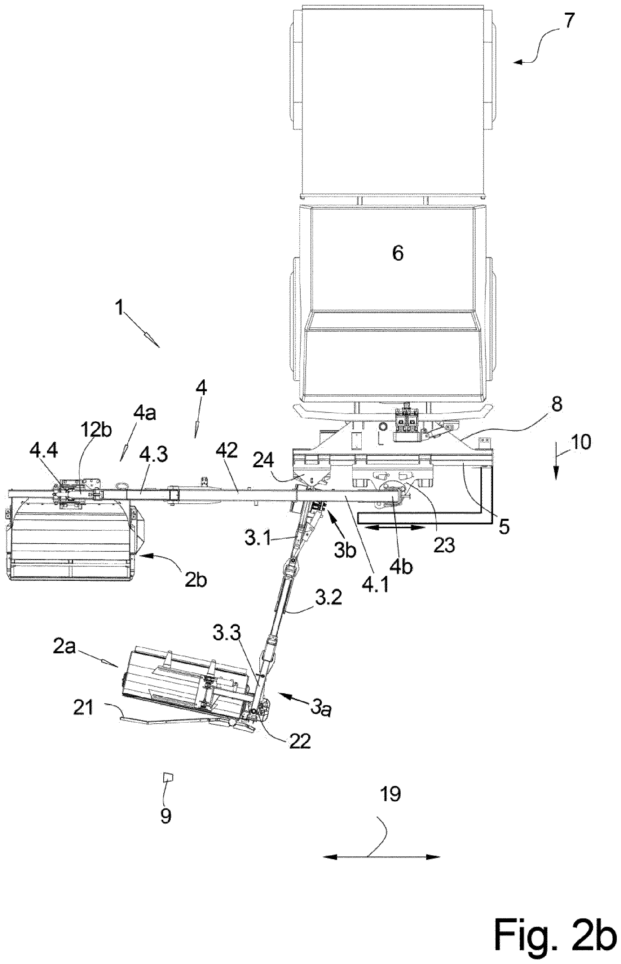

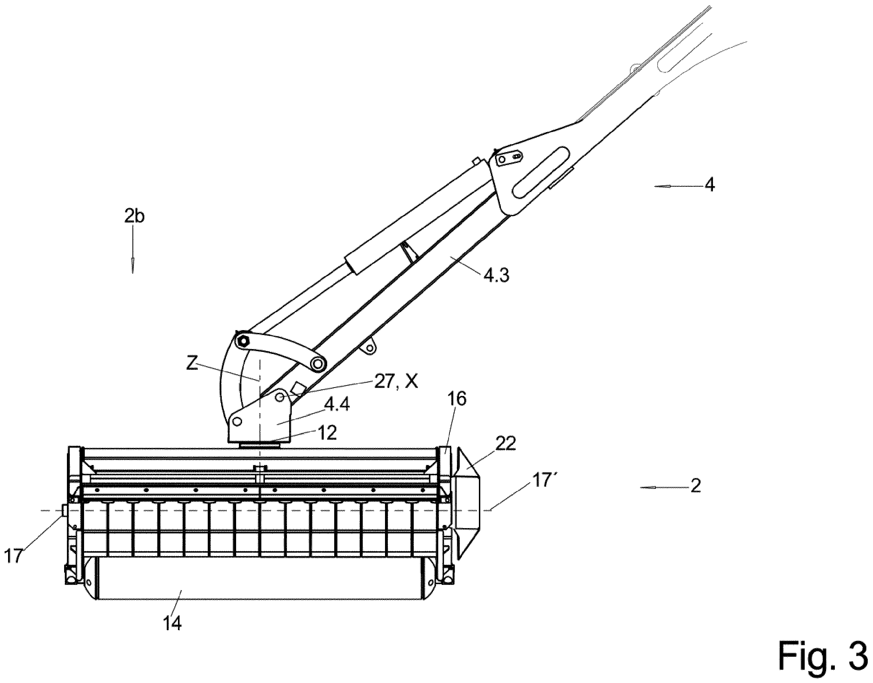

Die **Figuren 2a**, b sowie **Figur 3** zeigen einen typischen Anwendungsfall einer solchen Befestigung anhand eines in den **Figuren 2a**, b in Aufsicht und Frontansicht dargestellten Mähfahrzeuges in Form eines Trägerfahrzeuges 7 mit zwei an je einem Auslegerarm 3, 4 an deren freien, vorderen Ende getragenen je einem Mähkopf 2a, b als Arbeitsköpfe im Arbeitseinsatz:
Jeder Mähkopf 2a bzw. 2b ist von einem daran angeordneten Mähkopf-Motor 22 angetrieben.

Beide Auslegerarme 3, 4 sind mit ihrem hinteren Ende an einem an der Front des Trägerfahrzeuges 7 befestigten Vorbau 8 befestigt, indem der Vorbau 8 auf seiner Vorderseite eine Querversatzschiene 5 trägt, entlang welcher jeweils ein Verschiebeschuh 23, 24 in Querrichtung 19 verschiebbar und während des Betriebes gesteuert verfahrbar ist. An jedem Verschiebeschuh 23, 24 ist jeweils einer der Auslegerarme 4, 3 befestigt.

Die Auslegerarme 3, 4 bestehen jeweils aus mehreren Armteilen:
Der Auslegerarm 4 besteht beispielsweise aus einem Armteil 4.1, welches vom Verschiebeschuh 23 etwa in Richtung der Vertikalen 11 nach oben aufragt und um eine Hochachse drehbar ist und von dessen freien Ende ein weiteres Armteil 4.2 abragt und um eine Querachse verschwenkbar ist und an diesem analog wiederum ein weiteres Armteil 4.3.

Die Winkelstellung der Armteile zueinander wird über dazwischen angeordnete Hydraulikzylinder gesteuert, wodurch der jeweilige Mähkopf 2a, b, der zusätzlich gelenkig um ein Z-Gelenk 12 am vorderen Ende des Auslegerarms 4 befestigt ist, in jede gewünschte Lage hinsichtlich Fahrtrichtung 10 (X-Richtung), horizontale Querrichtung 19 (Y-Richtung) hier zu, sowie Drehlage um die Z-Achse eingestellt werden. Durch ein in der Regel vorhandenes weiteres X-Gelenk im Auslegerarm 3, 4 nahe dessen freien Endes ist jeder Mähkopf 2a, b zusätzlich schwenkbar um die Fahrtrichtung 10, die X-Achse, und kann damit um alle drei Raumrichtungen verschwenkt werden und in allen 3 Raumrichtungen positioniert werden, soweit es die Abmessungen des Auslegerarmes 3, 4 zulassen.

Wie am besten **Figur 2a** zeigt, werden von dem im Fahrerhaus 6 des Trägerfahrzeugs 7 sitzenden Bediener die Mähköpfe 2a, b so gesteuert, dass der Mähkopf 2a einen Randstreifenbereich unmittelbar neben dem Trägerfahrzeug 7 mäht und vor dem Vorbau 8 des Trägerfahrzeuges 7 positioniert ist, während der Mähkopf 2b den daran seitlich anschließenden, weiter außen bezüglich des Trägerfahrzeuges 7 liegenden, Randbereich mäht und in Fahrtrichtung 10 hinter dem ersten Mähkopf 2a positioniert ist.

Durch diese Aufteilung können auch Hindernisse 9, die im Bereich zwischen den Mähbreiten der beiden Mähköpfe 2a, b liegen, wie etwa Straßenleitpfosten, beidseitig ummäht werden.

Zu diesem Zweck ist an der Vorderkante des vorderen Mähkopfes 2a meist eine Taststange 21 vorhanden, die beim Anschlagen an ein solches Hindernis 9 an den Mähkopf 2a heran geschwenkt wird und dadurch ein Einklappen dieses Mähkopfes 2a um das auf der fahrzeugseitigen Stirnseite dieses Mähkopfes 2a angeordnete Z-Gelenk bezüglich des ihn tragenden Auslegerarmes 3 bewirkt.

In den **Figuren 2a**, b ist ferner im Fahrerhaus 6 im Sichtbereich des Bedieners ein Anzeigeelement 13 dargestellt, auf dem die gemessenen Belastungen ausgegeben werden können.

Die **Figur 3** zeigt den weiter außen arbeitenden Mähkopf 2b in vergrößerter Einzeldarstellung einschließlich des Z-Gelenkes 12b, wobei die hierfür notwendigen Stellelemente 60 nicht dargestellt sind:
Dieser Mähkopf 2b weist ein Gehäuse 16 auf, welches in der Quermitte über dieses Z-Gelenk 12 um die Z-Achse, die meist eine Hochachse ist, schwenkbar am freien Ende des Auslegerarmes 4 befestigt ist.

Im Inneren des nach unten offenen Gehäuses 16 ist eine Messerwelle 17 mit jedem ihrer beiden Enden um eine Messerwellen-Achse 17' in einem Stirnflansch des Gehäuses 16 gelagert.

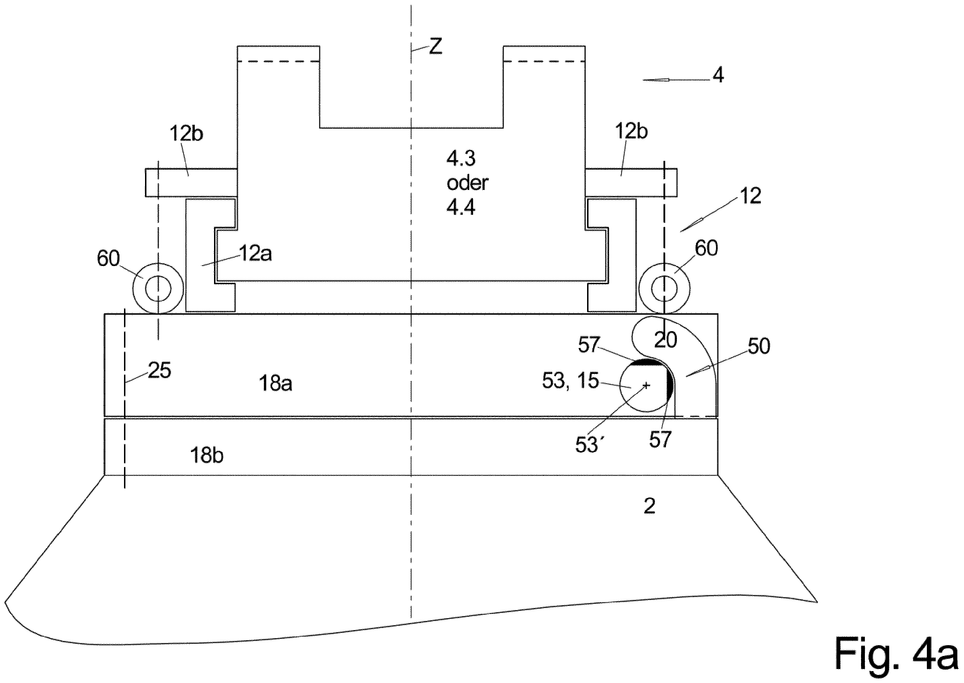

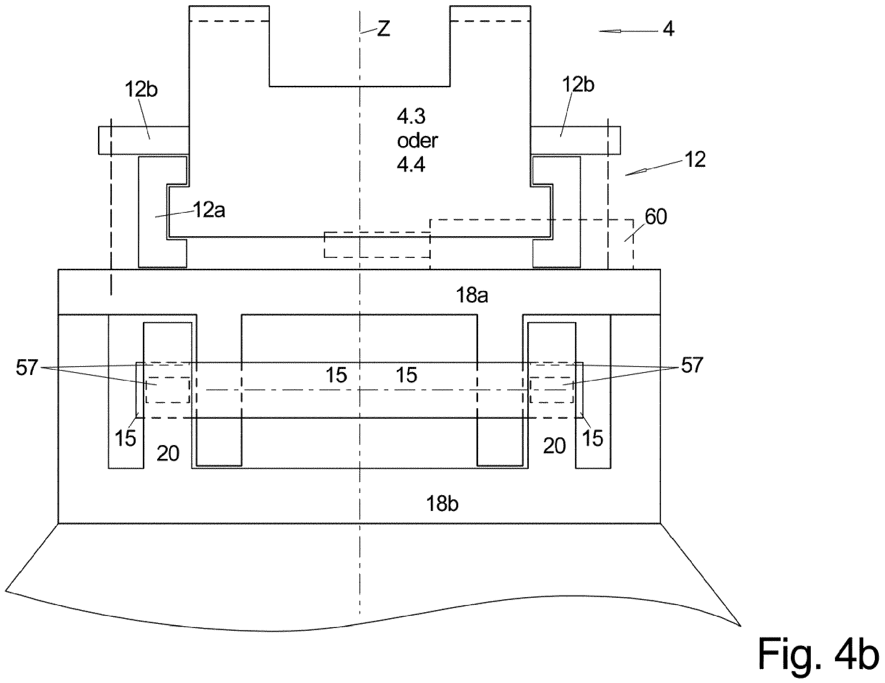

Die **Figuren 4a**, **b** zeigen als nicht erfindungsgemäßes Beispiel eine 1. Bauform und Anordnung einer Last-Messeinheit 50 zum Messen der Belastungen des Auslegerarmes 4 bei einer Befestigung des Arbeitskopfes 2 am Auslegerarm 4 gemäß der **Figuren 1a**, b, wobei die Messeinheit 50 am Auslegerarm 4 angeordnet ist:
Dabei sind die beiden Arretierbolzen 15 - oder auch nur einer - als Last-Messbolzen 53 ausgebildet und messen die auf diesen Bolzen einwirkenden Belastungen.

An oder in jedem der Last-Messbolzen 53 sind hierfür vorzugsweise Dehnmessstreifen 57 angeordnet, und zwar vorzugsweise über den Umfang verteilt, vorzugsweise mehrere, insbesondere jeweils in dem axialen Längenbereich, indem die als Arretierelemente 20 an dem als Last-Messbolzen 53 ausgebildeten Arretierbolzen 15 anliegen, sodass jeder der Last-Messbolzen 53 an ihm auftretende Belastungen in den beiden Querrichtungen zu seiner axialen Richtung 53' messen kann.

Durch entsprechende elektronische Verschaltung der Signale der Dehnmessstreifen 57 können somit nicht nur Kräfte in diesen beiden Querrichtungen gemessen werden, sondern bei Bedarf auch Momente um diese beiden Querrichtungen und/oder um seine axiale Richtung 53'.

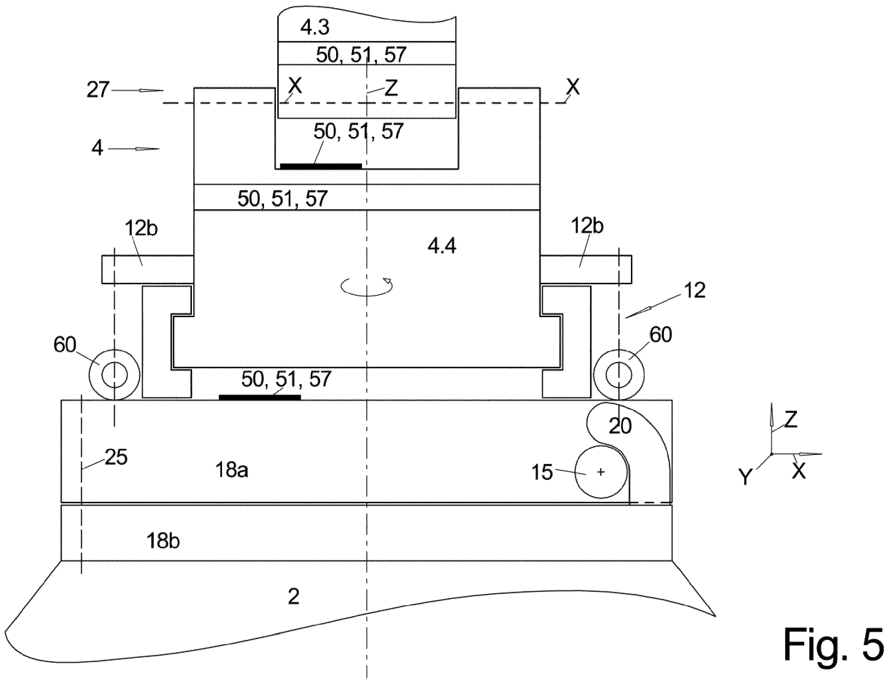

Die **Figur 5** zeigt in einer Seitenansicht weitere Positionen, an denen eine Last-Messeinheit 50 am oder im Auslegerarm 4 angeordnet werden kann, bei dem in diesem Fall stromaufwärts, also auf der vom Arbeitskopf 2 abgewandten Seite, des Z-Gelenkes 12 ein X-Gelenk 27 dargestellt ist, mittels dessen zwei miteinander verbundene Armteile 4.3 und 4.4 im Endbereich des Auslegerarmes 4 um die X-Richtung relativ zueinander verschwenkt werden können, und damit auch der Arbeitskopfes 2.

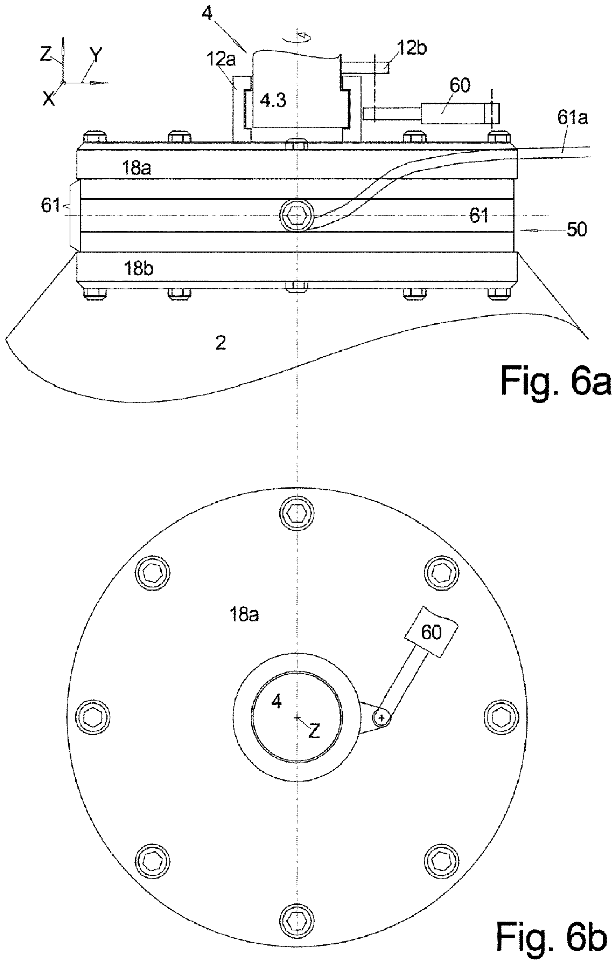

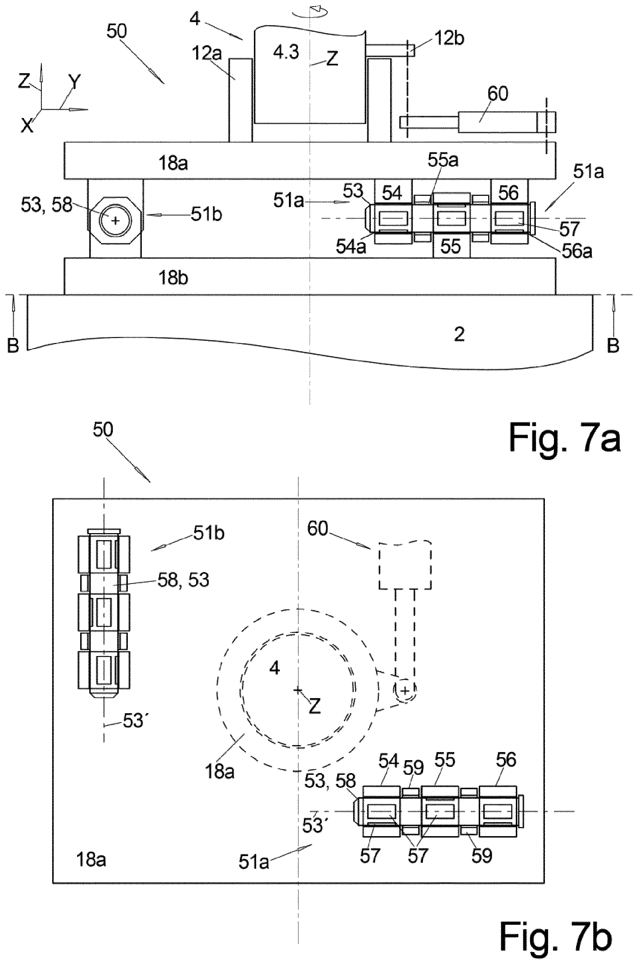

Die Last-Messeinheit 50 kann aus einem oder bevorzugt mehreren - dann elektronisch miteinander über eine Auswerteschaltung verschalteten - Dehnmessstreifen 57 bestehen oder eine oder mehrere Last-Messbolzen 53 umfassen - egal nach welchem Funktionsprinzip diese funktionieren - oder auf jede andere Art und Weise ausgebildet sein, insbesondere wie vom Aufbau her in den Figuren 6a, b oder **Figuren 7a**, b dargestellt, jedoch eben mit anderer Positionierung, und insbesondere jede beliebige Art von Belastungs-Sensoren 51 aufweisen.

Als mögliche Positionen zum Anordnen einer solchen Last-Messeinheit 50 - einzeln oder in Summe - sind dargestellt:
- nicht erfindungsgemäße Position: am oder im Armende 18a, also vor, sozusagen stromabwärts, des Z-Gelenkes 12,
- erfindungsgemäße Position: am oder im restlichen Auslegerarm 4 hinter, sozusagen stromaufwärts des Z-Gelenkes 12, insbesondere stromabwärts und/oder stromaufwärts des X-Gelenkes 27, beispielsweise auch zwischen Z-Gelenk 12 und X-Gelenk 27.

Die **Figuren 6a**, b sowie 7a, b zeigen dagegen als nicht erfindungsgemäßes Beispiel eine Anordnung der Last-Messeinheit 50 zwischen Auslegerarm 4 und Arbeitskopf 2, also insbesondere zwischen Armende 18a und Kopfende 18b:
Gemäß der **Figuren 6a**, b besteht die Last-Messeinheit 50 in Form einer von der Handhabung her einfachen Lösung darin, statt einzelner Belastungs-Sensoren einen sogenannten Ring-Kraftaufnehmer 61 zu verwenden und zwischen dem Armende 18a und dem Kopfende 18b zu fixieren, insbesondere zu Verschrauben.

Dabei handelt es sich um ein - meist zylindrisches und/oder plattenförmiges - am Markt erhältliches Bauteil 61, welches Kräfte, abhängig von der Ausführungsform, meist in seiner axialen Richtung und/oder auch in wenigstens einer seiner beiden Quer-Richtungen hierzu messen kann, vor allem aber auch Drehmomente um seine Längsachse 61' herum messen kann.

Dann muss ein solcher Ring-Kraftaufnehmer 61 lediglich zwischen dem z.B. plattenförmigen Armende 18a und dem z.B. ebenfalls meist plattenförmigen Kopfende 18b verschraubt werden, und die von dem Ring-Kraftaufnehmer 61 wegführende Signalleitung 61a mit der Steuerung 1* des Ausleger-Arbeitsgerätes 1 verbunden werden.

Die **Figuren 7a**, b zeigen als nicht erfindungsgemäßes Beispiel eine weitere Bauform der Last-Messeinheit 50 angeordnet zwischen den Auslegerarm 4 und Arbeitskopf 2, hier zwischen Armende 18a und Kopfende 18b:
Dabei umfasst die Last-Messeinheit 50 Last-Messbolzen 53, die durch wechselseitige Durchgangsöffnungen von Lagerböcken hindurch geschoben werden, wobei in diesem Fall jeweils drei Lagerböcke 54, 55, 56 in Reihe angeordnet sind.

Wie **Figur 7a** zeigt, sind die beiden Lagerböcke 54, 56 am Armende 18a des Auslegerarmes 4 befestigt und ragen von dort in Richtung Kopfende 18b des Arbeitskopfes 2 ab, während der Lagerbock 55 umgekehrt am Kopfende 18b befestigt ist, auf der zum Armende 18a hin weisenden Seite.

Dabei ragt der Lagerbock 55 zwischen die beiden anderen Lagerböcke 54, 56 so hinein, dass die in jedem der Lagerböcke vorhandenen Durchgangsöffnungen 54a, 55a, 56a miteinander fluchten, sodass der passgenau dort hinein passende Last-Messbolzen 53 sich durch alle drei hindurch erstreckt und damit das Armende 18a gegenüber dem Armende 18b an einer Stelle miteinander verbindet.

In axialer Richtung sind zwischen den Lagerböcken 54, 55, 56 axiale Distanzringe 59 angeordnet, die die Lagerböcke und damit Armende 18a und Kopfende 18b in axiale Richtung der Last-Messbolzen 53 gegeneinander positionieren.

Bei nur einer solchen Verbindung wäre dies eine noch schwenkbare Verbindung.

Deshalb sind - wie vor allem die Ansicht der **Figur 7b** zeigt - zwei solcher Last-Messbolzen 53 jeweils wie beschrieben zwischen dem Armende 18a und dem Kopfende 18b angeordnet, wobei ihre Längserstreckungen 53' nicht miteinander fluchten, sondern sich kreuzen, insbesondere im rechten Winkel zueinander verlaufen.

Die Last-Messbolzen 53 dienen hier also gleichzeitig als formschlüssige Verbindungselemente 58 zwischen Kopfende 18b und Armende 18a.

### BEZUGSZEICHENLISTE

- 1: Ausleger-Arbeitsgerät
- 1*: Steuerung
- 2, 2a, b: Arbeitskopf, Mähkopf
- 3, 4: Auslegerarm
- 3a: vorderes Ende
- 3b: hinteres Ende
- 3.1/.2/.3: Armteil
- 4a: vorderes Ende
- 4b: hinteres Ende
- 4.1/.2/.3/.4: Armteil
- 5: Querversatzschiene
- 6: Fahrerkabine
- 7: Trägerfahrzeug
- 8: Vorbau
- 9: Hindernis
- 10: Fahrtrichtung
- 11: Vertikale
- 12: Z-Gelenk
- 12a, 12b: Gelenkteil
- 13: Tastwalze
- 14: Tastwalze
- 15: Arretierbolzen
- 16: Gehäuse
- 17: Messerwelle
- 17': Messerwelle-Achse
- 18a: Armende
- 18b: Kopfende
- 19: Querrichtung
- 20: Arretierelement
- 21: Taststange
- 22: Mähkopf-Motor
- 23: Verschiebeschuh
- 24: Verschiebeschuh
- 25: Verschraubung
- 26: Arretierausnehmung
- 27: X-Gelenk

- 50: Last-Messeinheit
- 51: Belastungs-Sensor
- 52: Erkennungs-Sensor
- 53: Last-Messbolzen
- 53`: Längsrichtung
- 54: Lagerbock
- 54a: Durchgangsöffnung
- 55: Lagerbock
- 55a: Durchgangsöffnung
- 56: Lagerbock
- 56a: Durchgangsöffnung
- 57: Dehnmessstreifen
- 58: Verbindungs-Element
- 59: Distanzring
- 60: Stellelement
- 61: Ring-Kraftaufnehmer
- 61a: Signalleitung

## Patentansprüche

1. **Ausleger-Arbeitsgerät** (1) zum Befestigen an einem Trägerfahrzeug (7), mit
- wenigstens einem Auslegerarm (3, 4), dessen hinteres Ende (3b, 4b) an dem Trägerfahrzeug (7) befestigt werden kann,
- einem Armende (18a) als vorderes Ende (3a, 4a) des Auslegerarmes (3, 4),
- einem Arbeitskopf (2), welcher mit seinem dem Armende (18a) zugewandten Kopfende (18b) am Armende (18a) befestigt ist,
- einer Last-Messeinheit (50) mit wenigstens einem Belastungs-Sensor (51) zum Detektieren der auf den Auslegerarm (3, 4) einwirkenden Belastungen, - wobei die Last-Messeinheit (50) am oder im Auslegerarm (3, 4) angeordnet ist, und
- wobei das Armende (18a) gegenüber einem Rest des Auslegerarmes (3, 4) mittels eines Z-Gelenkes (12) um eine Z-Achse (Z) verschwenkbar ist,
**dadurch gekennzeichnet, dass**
- die Last-Messeinheit (50) am oder im Rest des Auslegerarmes (3, 4) hinter dem Z-Gelenk (12), also auf der vom Arbeitskopf (2) abgewandten Seite des Z-Gelenkes (12) angeordnet ist, und
- wenigstens ein Erkennungs-Sensor (52) zum Detektieren des befestigten Arbeitskopfes (2), mindestens hinsichtlich seiner Art, am oder im Auslegerarm (3, 4) angeordnet ist.

2. Ausleger-Arbeitsgerät nach Anspruch 1,
**dadurch gekennzeichnet, dass**
- das Armende (18a) schwenkbar gegenüber einem Rest des Auslegerarmes (3, 4) mittels eines X-Gelenkes (27) um eine X-Achse (Z) verschwenkbar ist,
und/oder
- das Ausleger-Arbeitsgerät (1) nur eine Last-Messeinheit (50) umfasst.

3. Ausleger-Arbeitsgerät nach Anspruch 1 oder 2,
**dadurch gekennzeichnet, dass**
- die Last-Messeinheit (50) auf den Auslegerarm (3, 4) einwirkende Kräfte in mehr als einer Richtung detektieren kann, insbesondere in X- (10) und Y-Richtung (19) detektieren kann,
- insbesondere die Last-Messeinheit (50) auf den Ausleger (3, 4) einwirkende Kräfte in X- (10), Y- (19) und Z-Richtung (11) messen und/oder auf den Ausleger einwirkende Momente um die X-, Y-, und Z-Richtung detektieren kann,
und/oder
- in der Last-Messeinheit (50) mehrere, insbesondere in unterschiedliche Richtungen messende, Belastungs-Sensoren (51a, b) zum Detektieren der auf den Auslegerarm (3, 4) einwirkenden Belastungen vorhanden sind.

4. Ausleger-Arbeitsgerät nach Anspruch 2 und gewünschtenfalls nach Anspruch 3, **dadurch gekennzeichnet, dass**
die Last-Messeinheit (50)
- zwischen dem Z-Gelenk (12) und dem X-Gelenk (27) oder hinter dem X-Gelenk (27) oder im X-Gelenk (27) angeordnet ist, insbesondere mehrere Belastungs-Sensoren (51) oder Last-Messeinheiten (50) an verschiedenen Stellen entlang des Auslegerarmes (3, 4) die Kräfte oder Momente in verschiedenen Raumrichtungen messen.

5. Ausleger-Arbeitsgerät nach einem der Ansprüche 1 bis 4,
**dadurch gekennzeichnet, dass**
- der Auslegerarm (3, 4) mit dem Arbeitskopf (2) über ein entfernbares Verbindungs-Element (58) formschlüssig verbunden ist,
- die Last-Messeinheit (50) an dem Verbindungs-Element (58) vorhanden ist oder selbst das Verbindungs-Element (58) ist,
und/oder
- das Kopfende (18b) am Armende (18a) drehfest befestigt ist,
- dadurch die Ausrichtung der Last-Messeinheit (50), insbesondere deren Sensoren (51), relativ zur Ausrichtung des Arbeitskopfes (2) unabhängig von der Schwenklage des Armendes (18a) immer die gleiche ist.

6. Ausleger-Arbeitsgerät nach einem der Ansprüche 1 bis 5,
**dadurch gekennzeichnet, dass**
der wenigstens eine Erkennungs-Sensor (52) zum Detektieren des befestigten Arbeitskopfes (2) hinsichtlich seiner Identität eingerichtet ist.

7. Ausleger-Arbeitsgerät nach einem der Ansprüche 1 bis 6,
**dadurch gekennzeichnet, dass**
- der wenigstens eine Erkennungs-Sensor (52) und der Belastungs-Sensor (51) funktionsvereinigt sind,
und/oder
- die Last-Messeinheit (50) den wenigstens einen Erkennungs-Sensor (52) umfasst.

8. Ausleger-Arbeitsgerät nach einem der Ansprüche 1 bis 7,
**dadurch gekennzeichnet, dass**
- der Belastungssensor (51) der Last-Messeinheit (50) ein elektrischer Sensor ist, insbesondere ein eine Änderung der elektrischen Spannung und oder des elektrischen Widerstandes messender elektrischer Belastungssensor (51),
- insbesondere die Last-Messeinheit (50) einen Dehnmessstreifen (57) umfasst,
- der Dehnmessstreifen (57) insbesondere in einer Vertiefung im Armende (18a) oder im Rest des Auslegerarmes (3, 4) angeordnet und insbesondere darin vergossen ist.

9. Ausleger-Arbeitsgerät nach Anspruch 8,
**dadurch gekennzeichnet, dass**
- mehrere Dehnmessstreifen (57) mit unterschiedlicher Ausrichtung vorhanden sind,
- insbesondere die Dehnmessstreifen (57) über eine elektrische Brückenschaltung miteinander verbunden sind,
- insbesondere so, dass wenigstens ein Paar von Dehnmessstreifen (57) eine Biegebelastung des Armendes (18a) misst und/oder wenigstens ein Paar von Dehnmessstreifen (57) eine Torsionsbelastung des Armendes (18a), insbesondere um die Z-Achse, misst.

10. Ausleger-Arbeitsgerät nach einem Ansprüche 1 bis 9,
**dadurch gekennzeichnet, dass**
- die Last-Messeinheit (50) wenigstens einen Lastmess-Bolzen (53) umfasst, der die am Lastmess-Bolzen (53) anliegende Kraft in wenigstens einer der Querrichtungen zur Erstreckungsrichtung (53') des Lastmess-Bolzens (53) und/oder in dessen Erstreckungsrichtung (53') misst und insbesondere ausgibt,
insbesondere
- das Kopfende (18b) am Armende (18a) befestigt ist mittels eines fix am Armende (18a) befestigten Arretier-Bolzens (15), der gegenüber dem Kopfende (18b) arretiert werden kann,
- das der Arretier-Bolzen (15) als Lastmess-Bolzen (53) ausgebildet ist.

11. Ausleger-Arbeitsgerät nach einem der Ansprüche 1 bis 9, wobei
- die Last-Messeinheit (50) wenigstens einen Lastmess-Bolzen (53) umfasst, der die am Lastmess-Bolzen (53) anliegende Kraft in wenigstens einer der Querrichtungen zur Erstreckungsrichtung (53') des Lastmess-Bolzens (53) und/oder in dessen Erstreckungsrichtung (53') misst und insbesondere ausgibt, wobei
- das Kopfende (18b) am Armende (18a) befestigt ist mittels eines entfernbar zwischen Armende (18a) und Kopfende (18b) vorhandenen Verbindungselementes (58),
**dadurch gekennzeichnet, dass**
- das Armende (18a) auf der zum Kopfende (18b) hin gerichteten Fläche einen Lagerbock (54, 56) mit einer Durchgangsöffnung (54a, 56a) aufweist,
- das Kopfende (18b) auf der zum Armende (18a) hin gerichteten Fläche einen Lagerbock (55) mit einer Durchgangsöffnung (55a) aufweist,
- sich durch die fluchtend zueinander ausgerichteten Durchgangsöffnungen (54a, 55a, 56a) ein entfernbarer Last-Messbolzen (53) erstreckt, der gleichzeitig als Verbindungs-element (58) und Last-Messeinheit (50) dient.

12. Ausleger-Arbeitsgerät nach einem der Ansprüche 1 bis 11,
**dadurch gekennzeichnet, dass**
- mindestens zwei, sich vorzugsweise in unterschiedliche, insbesondere lotrecht zueinander verlaufende, Querrichtungen (X, Y) zur Z-Richtung erstreckende, Last-Messbolzen (53) vorhanden sind.

13. Ausleger-Arbeitsgerät nach einem der Ansprüche 10 bis 12,
**dadurch gekennzeichnet, dass**
- die auf den Last-Messbolzen (53) einwirkenden Kräfte in zwei in Erstreckungsrichtung (53') axial beabstandeten Radialebenen des Last-Messbolzens (53) gemessen werden,
- insbesondere bei Verwendung des Last-Messbolzens (53) als Verbindungs-Element (58) entweder am Armende (18a) oder am Kopfende (18b) zwei Lagerblöcke (54, 56) mit zueinander fluchtenden Durchgangsöffnungen (54a, 56a) angeordnet sind, zwischen die der am anderen Teil befestigte Lagerbock (55) mit seiner Durchgangsöffnung (55a) passt,
- der Last-Messbolzen (53) sich durch alle drei Lagerböcke (54, 55, 56) hindurch erstreckt.

14. Ausleger-Arbeitsgerät nach einem der Ansprüche 1 bis 13,
**dadurch gekennzeichnet, dass**
- der mindestens eine Belastungs-Sensor (51) am Armende (18a) des Auslegerarmes (3, 4) ohne Kontakt zum Kopfende (18b) des Arbeitskopfes angeordnet ist und
- kontaktlos am Kopfende (18b) misst.

15. Ausleger-Arbeitsgerät nach einem der Ansprüche 1 bis 14,
**dadurch gekennzeichnet, dass**
- die Last-Messeinheit (50) einen, insbesondere zylindrischen, insbesondere ringförmigen, Ring-Kraftaufnehmer (61) umfasst,
- der in der Lage ist, zumindest Kräfte in seiner axialen Richtung (61') und/oder Drehmomente um eine der Querrichtungen hierzu zu messen,
- der insbesondere mit seiner axialen Richtung (61') in Längsrichtung (10) verlaufend zwischen Armende (18a) und Kopfende (18b) angeordnet ist.

16. **Selbstfahrende Arbeitsmaschine** mit
- einem Trägerfahrzeug (7),
- einem Ausleger-Arbeitsgerät (1) nach einem der vorhergehenden Ansprüche, umfassend
- einen Auslegerarm (3, 4) mit Stellelementen zum Verstellen der Armteile (3.1, 3.2, 3.3 bzw., 4.1, 4.2, 4.3, 4.4) relativ zueinander,
- einen am freien, vorderen (3a, 4a) Ende des Auslegerarmes (3, 4) befestigten Arbeitskopf (2), der im Arbeitseinsatz in Kontakt mit der Umgebung abseits des Trägerfahrzeuges (7) gerät,
- eine Last-Messeinheit (50) zum Messen der auf den Auslegerarm (3, 4) einwirkenden Belastungen,
- eine Steuerung (1*) zum Ansteuern zumindest der Stellelemente, wobei
- die Last-Messeinheit (50) angeordnet und/oder ausgebildet ist gemäß einem der vorhergehenden Ansprüche,
und wobei
- die Steuerung (1*) des Ausleger-Arbeitsgerätes (1) dazu ausgebildet ist, die Stellelemente abhängig von der Signalen der Last-Messeinheit (50) zu steuern.

17. **Verfahren** zum Detektieren der auf den Auslegerarm (3, 4) eines Ausleger-Arbeitsgerätes (1) einwirkenden Belastungen bei einem Ausleger-Arbeitsgerät (1) nach einem der vorhergehenden Ansprüche 1 bis 15, wobei die Belastung am oder im Auslegerarm (3, 4) gemessen wird.

## Claims

1. **Boom working device** (1) for attachment to a carrier vehicle (7), with
- at least one boom (3, 4), the rear end (3b, 4b) of which can be attached to the carrier vehicle (7),
- an arm end (18a) as front end (3a, 4a) of the boom (3, 4),
- a working head (2), which is attached to the arm end (18a) with its head end (18b) facing the arm end (18a),
- a load measuring unit (50) with at least one load sensor (51) for detecting the loads acting on the boom (3, 4), - wherein the load measuring unit (50) is arranged on or in the boom (3, 4), and
- wherein the arm end (18a) is pivotable relative to a remainder of the boom (3, 4), by means of a Z-joint (12) about a Z-axis (Z),
**characterized in that**
- the load measuring unit (50) is arranged on or in the remainder of the boom (3, 4) behind the Z-joint (12), i.e. on the side of the Z-joint (12) facing away from the working head (2), and
- at least one recognition sensor (52) for detecting the fixed working head (2), at least regarding its type, is arranged on or in the boom (3, 4).

2. Boom working device according to claim 1,
**characterized in that**
- the arm end (18a) is pivotable relative to a remainder of the boom (3, 4), by means of a X-joint (27) about an X-axis (Z),
and/or
- the boom working device (1) comprises only one load measuring unit (50).

3. Boom working device according to claim 1 or 2,
**characterized in that**
- the load measuring unit (50) can detect forces acting on the boom (3, 4) in more than one direction, in particular in the X- (10) and Y-direction (19),
- in particular the load measuring unit (50) can measure forces acting on the boom (3, 4) in the X- (10), Y- (19) and Z-directions (11) and/or detect moments acting on the boom about the X-, Y- and Z-directions,
and/or
- in the load measuring unit (50) there are several load sensors (51a, b), in particular measuring in different directions, for detecting the loads acting on the boom (3, 4).

4. Boom working device according to claim 2 and optionally according to claim 3,
**characterized in that**
the load measuring unit (50)
- is arranged between the Z-joint (12) and the X-joint (27) or behind the X-joint (27) or in the X-joint (27), in particular several load sensors (51) or load measuring units (50) at different points along the boom (3, 4) measure the forces or moments in different spatial directions.

5. Boom working device according to one of claims 1 to 4,
**characterized in that**
- the boom (3, 4) is positively connected to the working head (2) via a removable connecting element (58),
- the load measuring unit (50) is present on the connecting element (58) or is the connecting element (58) itself,
and/or
- the head end (18b) is attached to the arm end (18a) so that it cannot rotate,
- thus the alignment of the load measuring unit (50), in particular its sensors (51), relative to the alignment of the working head (2) is always the same, regardless of the pivot position of the arm end (18a).

6. Boom working device according to one of claims 1 to 5,
**characterized in that**
the at least one recognition sensor (52) for detecting the fixed working head (2) is configured regarding its identity.

7. Boom working device according to one of claims 1 to 6,
**characterized in that**
- the at least one detection sensor (52) and the load sensor (51) are functionally adjusted,
and/or
- the load measuring unit (50) comprises the at least one detection sensor (52).

8. Boom working device according to one of claims 1 to 7,
**characterized in that**
- the load sensor (51) of the load measuring unit (50) is an electrical sensor, in particular an electrical load sensor (51), measuring a change in the electrical voltage and/or the electrical resistance,
- in particular the load measuring unit (50) comprises a strain gauge (57),
- the strain gauge (57) is arranged in particular in a recess in the arm end (18a) or in the remainder of the boom (3, 4) and in particular is cast therein.

9. Boom working device according to claim 8,
**characterized in that**
- there are several strain gauges (57) with different orientation,
- in particular the strain gauges (57) are connected to each other via an electrical bridge circuit,
- in particular such that at least one pair of strain gauges (57) measures a bending load of the arm end (18a) and/or at least one pair of strain gauges (57) measures a torsional load of the arm end (18a), in particular about the Z-axis.

10. Boom working device according to one of claims 1 to 9,
**characterized in that**
- the load measuring unit (50) comprises at least one load measuring bolt (53) which measures and in particular outputs the force applied to the load measuring bolt (53) in at least one of the transverse directions to the direction of extension (53') of the load measuring bolt (53) and/or in the direction of extension (53') thereof,
in particular
- the head end (18b) is attached to the arm end (18a) by means of a locking bolt (15) fixed to the arm end (18a), which can be locked opposite the head end (18b),
- the locking pin (15) is designed as a load measuring bolt (53).

11. Boom working device according to one of claims 1 to 9, wherein
- the load measuring unit (50) comprises at least one load measuring bolt (53) which measures and in particular outputs the force applied to the load measuring bolt (53) in at least one of the transverse directions to the direction of extension (53') of the load measuring bolt (53) and/or in the direction of extension (53') thereof,
- the head end (18b) is attached to the arm end (18a) by means of a removable connecting element (58) provided between the arm end (18a) and the head end (18b),
**characterized in that**
- the arm end (18a) has a bearing support (54, 56) with a through opening (54a, 56a) on the surface directed towards the head end (18b),
- the head end (18b) has a bearing block (55) with a through opening (55a) on the surface directed towards the arm end (18a),
- a removable load measuring bolt (53) extends through the through-openings (54a, 55a, 56a) aligned with one another, which simultaneously serves as a connecting element (58) and load measuring unit (50).

12. Boom working device according to one of claims 1 to 11,
**characterized in that**
- at least two load measuring bolts (53) are present, preferably extending in different, in particular perpendicular to each other, transverse directions (X, Y) to the Z-direction.

13. Boom working device according to one of claims 10 to 12,
**characterized in that**
- the forces acting on the load measuring bolt (53) are measured in two radial planes of the load measuring bolt (53) axially spaced apart in the direction of extension (53'),
- in particular when using the load measuring bolt (53) as a connecting element (58), either at the arm end (18a) or at the head end (18b), two bearing supports (54, 56) with aligned through-openings (54a, 56a) are arranged between which the bearing support (55) fastened to the other part fits with its through-opening (55a),
- the load measuring bolt (53) extends through all three bearing supports (54, 55, 56).

14. Boom working device according to one of claims 1 to 13,
**characterized in that**
- the at least one load sensor (51) is arranged at the arm end (18a) of the boom (3, 4) without contact to the head end (18b) of the working head and
- contactless at the head end (18b).

15. Boom working device according to one of claims 1 to 14,
**characterized in that**
- the load measuring unit (50) comprises an, in particular cylindrical, in particular annular, ring-shaped force transducer (61),
- which is capable of measuring at least forces in its axial direction (61') and/or torques about one of the transverse directions thereto,
- which is arranged, in particular with its axial direction (61') running in the longitudinal direction (10), between arm end (18a) and head end (18b).

16. **Self-propelled working machine** with
- a carrier vehicle (7),
- a boom working device (1) according to one of the preceding claims, comprising
- a boom (3, 4) with positioning elements for positioning the arm parts (3.1, 3.2, 3.3 or, 4.1, 4.2, 4.3, 4.4) relative to one another,
- a working head (2) attached to the free, front (3a, 4a) end of the boom (3, 4), which during work comes into contact with the environment away from the carrier vehicle (7),
- a load measuring unit (50) for measuring the loads acting on the boom (3, 4),
- a control (1*) to control at least the actuators,
wherein
- the load measuring unit (50) is arranged and/or embodied according to one of the preceding claims,
and wherein
- the control (1*) of the boom working device (1) is adapted to control the actuators depending on the signals of the load measuring unit (50).

17. **Method** for detecting the loads acting on the boom (3, 4) of a boom working device (1) in the case of a boom working device (1) according to one of the preceding claims 1 to 15,
wherein the load is measured on or in the boom (3, 4).

## Revendications

1. **Dispositif de travail à bras porteur** (1) destiné à être fixé à un véhicule porteur (7), comprenant
- au moins un bras porteur (3, 4) dont l'extrémité arrière (3b, 4b) peut être fixée au véhicule porteur (7),
- une extrémité de bras (18a) en tant qu'extrémité avant (3a, 4a) du bras porteur (3, 4),
- une tête de travail (2) qui est fixée à l'extrémité de bras (18a) par son extrémité de tête (18b) tournée vers l'extrémité de bras (18a),
- une unité de mesure de charge (50) avec au moins un capteur de charge (51) pour détecter les charges agissant sur le bras porteur (3, 4), - l'unité de mesure de charge (50) étant disposée sur ou dans le bras porteur (3, 4), et
- l'extrémité de bras (18a) pouvant pivoter autour d'un axe Z (Z) par rapport au reste du bras porteur (3, 4) au moyen d'une articulation en Z (12),
**caractérisé en ce que**
- l'unité de mesure de charge (50) est disposée sur ou dans le reste du bras porteur (3, 4) derrière l'articulation en Z (12), c'est-à-dire sur le côté de l'articulation en Z (12) opposé à la tête de travail (2), et
- au moins un capteur de détection (52) pour détecter la tête de travail (2) fixée, au moins en ce qui concerne son type, est disposé sur ou dans le bras porteur (3, 4).

2. Dispositif de travail à bras porteur selon la revendication 1,
**caractérisé en ce que**
- l'extrémité de bras (18a) peut pivoter par rapport à un reste du bras porteur (3, 4) au moyen d'une articulation X (27) autour d'un axe X (Z),
et/ou
- le dispositif de travail à bras porteur (1) ne comprend qu'une seule unité de mesure de charge (50).

3. Dispositif de travail à bras porteur selon la revendication 1 ou 2,
**caractérisé en ce que**
- l'unité de mesure de charge (50) peut détecter des forces agissant sur le bras porteur (3, 4) dans plus d'une direction, en particulier dans les directions X (10) et Y (19),
- en particulier l'unité de mesure de charge (50) peut mesurer des forces agissant sur le bras porteur (3, 4) dans les directions X (10), Y (19) et Z (11) et/ou détecter des moments agissant sur le bras autour des directions X, Y et Z,
et/ou
- plusieurs capteurs de charge (51a, b), mesurant notamment dans des directions différentes, sont présents dans l'unité de mesure de charge (50) pour détecter les charges agissant sur le bras porteur (3, 4).

4. Dispositif de travail à bras porteur selon la revendication 2 et, si souhaité, selon la revendication 3,
**caractérisé en ce que**
l'unité de mesure de charge (50)
- est disposée entre l'articulation en Z (12) et l'articulation en X (27) ou derrière l'articulation en X (27) ou dans l'articulation en X (27), en particulier plusieurs capteurs de charge (51) ou unités de mesure de charge (50) mesurent les forces ou les moments dans différentes directions spatiales à différents endroits le long du bras porteur (3, 4).

5. Dispositif de travail à bras porteur selon l'une des revendications 1 à 4, **caractérisé en ce que**
- le bras porteur (3, 4) est relié par complémentarité de forme à la tête de travail (2) par un élément de liaison amovible (58),
- l'unité de mesure de charge (50) est présente sur l'élément de liaison (58) ou est elle-même l'élément de liaison (58),
et/ou
- l'extrémité de tête (18b) est fixée à l'extrémité de bras (18a) de manière à ne pas pouvoir tourner,
- par cela, l'orientation de l'unité de mesure de charge (50), en particulier de ses capteurs (51), par rapport à l'orientation de la tête de travail (2) est toujours la même, indépendamment de la position de pivotement de l'extrémité de bras (18a).

6. Dispositif de travail à bras porteur selon l'une quelconque des revendications 1 à 5, **caractérisé en ce que**
ledit au moins un capteur de détection (52) est conçu pour détecter l'identité de la tête de travail (2) fixée.

7. Dispositif de travail à bras porteur selon l'une quelconque des revendications 1 à 6, **caractérisé en ce que**
- ledit au moins un capteur de détection (52) et le capteur de charge (51) sont fonctionnellement unifiés,
et/ou
- l'unité de mesure de charge (50) comprend ledit au moins un capteur de détection (52).

8. Dispositif de travail à bras porteur selon l'une quelconque des revendications 1 à 7, **caractérisé en ce que**
- le capteur de charge (51) de l'unité de mesure de charge (50) est un capteur électrique, en particulier un capteur de charge électrique (51) mesurant une variation de la tension électrique et/ou de la résistance électrique,
- en particulier, l'unité de mesure de charge (50) comprend une jauge de contrainte (57),
- la jauge de contrainte (57) est disposée en particulier dans un renfoncement dans l'extrémité de bras (18a) ou dans le reste du bras de la bras porteur (3, 4) et y est en particulier coulée.

9. Dispositif de travail à bras porteur selon la revendication 8,
**caractérisé en ce que**
- plusieurs jauges de contrainte (57) sont présentes avec une orientation différente,
- en particulier les jauges de contrainte (57) sont reliées entre elles par un circuit électrique en pont,
- en particulier de telle sorte qu'au moins une paire de jauges de contrainte (57) mesure une charge de flexion de l'extrémité de bras (18a) et/ou au moins une paire de jauges de contrainte (57) mesure une charge de torsion de l'extrémité de bras (18a), en particulier autour de l'axe Z.

10. Dispositif de travail à bras porteur selon l'une quelconque des revendications 1 à 9, **caractérisé en ce que**
- l'unité de mesure de charge (50) comprend au moins un boulon de mesure de charge (53) qui mesure et notamment délivre la force appliquée au boulon de mesure de charge (53) dans au moins une des directions transversales à la direction d'extension (53') du boulon de mesure de charge (53) et/ou dans sa direction d'extension (53'),
en particulier
- l'extrémité de tête (18b) est fixée à l'extrémité de bras (18a) au moyen d'un boulon d'arrêt (15) fixé à l'extrémité de bras (18a) et pouvant être bloqué par rapport à l'extrémité de tête (18b),
- le boulon d'arrêt (15) est conçu comme un boulon de mesure de charge (53).

11. Dispositif de travail à bras porteur selon l'une quelconque des revendications 1 à 9, dans lequel
- l'unité de mesure de charge (50) comprend au moins un boulon de mesure de charge (53) qui mesure et notamment délivre la force appliquée au boulon de mesure de charge (53) dans au moins une des directions transversales à la direction d'extension (53') du boulon de mesure de charge (53) et/ou dans sa direction d'extension (53'), dans lequel
- l'extrémité de tête (18b) est fixée à l'extrémité de bras (18a) au moyen d'un élément de liaison (58) présent de manière amovible entre l'extrémité de bras (18a) et l'extrémité de tête (18b),
**caractérisé en ce que**
- l'extrémité de bras (18a) présente, sur la surface orientée vers l'extrémité de tête (18b), un support (54, 56) avec une ouverture de passage (54a, 56a),
- l'extrémité de tête (18b) comporte, sur la surface dirigée vers l'extrémité de bras (18a), un support de palier (55) avec une ouverture de passage (55a),
- un boulon de mesure de charge amovible (53) s'étend à travers les ouvertures de passage alignées (54a, 55a, 56a), qui sert simultanément d'élément de liaison (58) et d'unité de mesure de charge (50).

12. Dispositif de travail à bras porteur selon l'une quelconque des revendications 1 à 11, **caractérisé en ce que**
- il existe au moins deux axes de mesure de charge (53) s'étendant de préférence dans des directions transversales (X, Y) différentes, en particulier perpendiculaires entre elles, par rapport à la direction Z.

13. Dispositif de travail à bras porteur selon l'une quelconque des revendications 10 à 12, **caractérisé en ce que**
- les forces agissant sur le boulon de mesure de charge (53) sont mesurées dans deux plans radiaux du boulon de mesure de charge (53), espacés axialement dans la direction d'extension (53'),
- en particulier, lorsque le boulon de mesure de charge (53) est utilisé comme élément de liaison (58), deux supports de palier (54, 56) sont disposés soit à l'extrémité de bras (18a), soit à l'extrémité de tête (18b), avec des ouvertures de passage (54a, 56a) alignées l'une sur l'autre, entre lesquelles le support de palier (55) fixé sur l'autre partie s'adapte avec son ouverture de passage (55a),
- le boulon de mesure de charge (53) s'étend à travers les trois supports de palier (54, 55, 56).

14. Dispositif de travail à bras porteur selon l'une quelconque des revendications 1 à 13, **caractérisé en ce que**
- ledit au moins un capteur de charge (51) est disposé à l'extrémité de bras (18a) du bras porteur (3, 4) sans contact avec l'extrémité de tête (18b) de la tête de travail et
- mesure sans contact à l'extrémité de tête (18b).

15. Dispositif de travail à bras porteur selon l'une quelconque des revendications 1 à 14, **caractérisé en ce que**
- l'unité de mesure de charge (50) comprend un capteur de force annulaire (61), notamment cylindrique, en particulier annulaire,
- qui est en mesure de mesurer au moins des forces dans sa direction axiale (61') et/ou des couples autour de l'une des directions transversales à celle-ci,
- qui est disposé entre l'extrémité de bras (18a) et l'extrémité de tête (18b), en particulier avec sa direction axiale (61') s'étendant dans la direction longitudinale (10).

16. **Machine de travail automotrice** comprenant
- un véhicule porteur (7),
- un dispositif de travail à bras porteur (1) selon l'une des revendications précédentes, comprenant
- un bras porteur (3, 4) avec des éléments de réglage pour le déplacement des parties du bras (3.1, 3.2, 3.3 ou, 4.1, 4.2, 4.3, 4.4) les unes par rapport aux autres,
- une tête de travail (2) fixée à l'extrémité avant libre (3a, 4a) du bras porteur (3, 4), qui, lors de l'utilisation, entre en contact avec l'environnement à l'écart du véhicule porteur (7),
- une unité de mesure de charge (50) pour mesurer les charges agissant sur le bras porteur (3, 4),
- une commande (1*) pour commander au moins les éléments de réglage,
dans lequel
- l'unité de mesure de charge (50) est disposée et/ou conçue selon l'une des revendications précédentes,
et dans lequel
- la commande (1*) du dispositif de travail à bras porteur (1) est adapté pour commander les éléments de réglage en fonction des signaux de l'unité de mesure de charge (50).

17. **Procédé** de détection des charges agissant sur le bras porteur (3, 4) d'un dispositif de travail à bras porteur (1) dans le cas d'un dispositif à bras porteur (1) selon l'une des revendications précédentes 1 à 15,
dans lequel la charge est mesurée sur ou dans le bras porteur (3, 4).
